# EUROPEAN PATENT APPLICATION

(11) **EP 1 315 153 A1**
(43) Date of publication of application: **28.05.2003**
(21) Application number: 01954398.2
(22) Date of filing: 31.07.2001
(51) Int. Cl.: G11B 7/0033, G11B 7/30, G11B 7/24, G11B 20/12, B42D 15/10, B42D 15/02, G09F 19/00

(54) **OPTICAL DISK RECORDING MEDIUM AND NAME CARD AND ADVERTISING METHOD**

(30) Priority: 02.08.2000 JP 2000234830; 22.12.2000 JP 2000391478
(71) Applicant: Itomasu Global Finance Management Inc, Tokyo 157-0077 (JP)
(72) Inventor: KAMIMORI, Manabu, c/o Disc Aid Co Ltd, Shinjuku-ku, Tokyo 162-0822 (JP); HOSODA, Noriyoshi, Itomasu Global Finance Manag, Setagaya-ku, Tokyo 157-00 (JP)
(74) Representative: Leson, Thomas Johannes Alois, Dipl.-Ing.
(86) International application number: JP0106602
(87) International publication number: WO02013191

(57) **Abstract**

An optical disk recording medium according to the present invention includes an optical disk recording medium body, and a display section provided on a surface of the optical disk recording medium body. A signal-recording/deleting section capable of recording, rewriting and deleting date is provided on a programming area of the optical disk recording medium body, and data corresponding to contents displayed on the display section are recorded in the signal-recording/deleting section.

## Description

### TECHNICAL FIELD

The present invention relates to an optical disk recording medium which is capable of being distributed to a large number of persons and used in a computer by each person accepting the recording medium distributed, a name card, and an advertising method.

### BACKGROUND ART

A CD-ROM is a recording medium which comprises a so-called compact disk applied to a read-only-memory (ROM), so that data and a program can be recorded in the disk, and the recorded contents can be read out by a computer. The CD-ROM has been marketed as having a most important feature that it has a recording capacity as large as a letter or character information and a graphic information corresponding to 10 volumes of encyclopedias can be recorded in a single disk, and contents of the disk can be searched in a very short time.

A CD-R is "a data-recordable compact disk", which is designed so that data can be recorded only one time, but cannot be deleted. On the contrast, a CD-RW is "a rewritable compact disk", which is designed so that data can be recorded and deleted any number of times, as in a so-called floppy disk.

Both of the CD-R and the CD-RW have the same shape as a usual CD-ROM. The CD-R is adapted to record data by applying a laser beam to a special dye applied to a recording surface of the disk to produce a chemical reaction. The CD-RW is adapted to be able to record data by applying a laser beam to change the molecular arrangement in a recording layer, or to be able to record data comprising 1 and 0 by applying a laser beam to an amorphous thin film to change the reflectance.

Each of a DVD and a DVD-ROM is a recording medium made at an increased recording density utilizing a compact disk and a CD-ROM, so that it has a recording capacity about 7.2 times that of the CD-ROM per layer on one surface. Each of the DVD and the DVD-ROM has been marketed as having a most important feature of a larger capacity.

A DVD-R is "a data-recordable digital video disk" which is designed so that data can be recorded only one time, but cannot be deleted. On the contrast, each of a DVD-RW and a DVD-RAM is "a rewritable digital video disk", which is designed so that data can be recorded and deleted any number of times, as in a floppy disk.

However, the above-described CD-ROM, CD-R and CD-RW or DVD, DVD-ROM, DVD-R, DVD-RW and DVD-RAM are generally used in a doughnut shape and at a standardized size, but they have been not necessarily rearranged, accommodated and stored easily. In addition, even if the CD-ROM or the DVD-ROM is used for the advertisement and propaganda for an enterprise or the like, advertising contents could not be appealed enough to satisfy, for example, a consumer accepting the advertisement.

The present invention has been accomplished with the above-described problems in view, and it is a first object of the present invention to provide a recording medium, which is capable of being distributed to a large number of persons, so that a person accepting the distribution necessarily watches contents introduced by a company or the like providing an advertisement or the like, on a display by installing them in a computer, leading to a remarkably increased advertising/propagating effect.

It is a second object of the present invention to provide a recording medium, which can be used as a name card, whereby a person accepting the name card necessarily watches a homepage in the name card of a person providing the name card on a display by installing the name card in a computer.

### DISCLOSURE OF THE INVENTION

To achieve the above object, according to claim 1 of the present invention, there is provided an optical disk recording medium comprising an optical disk recording medium body, and a display section provided on a surface of the optical disk recording medium body, a signal-recording/deleting section capable of recording, rewriting and deleting data being provided in a programming area of the optical disk recording medium body, data corresponding to contents displayed on the display section being recorded in the signal-recording/deleting section.

With such arrangement, for example, when the optical disk recording medium inserted into a card case made of a transparent plastic material has been distributed to a large number of unspecified persons, a person accepting the distribution, if he utilizes the distributed optical disk recording medium in a his own computer in order to utilize the signal-recording/deleting section of the distributed optical disk recording medium, can read out data corresponding to contents recorded in the signal-recording/deleting section of the optical disk recording medium and displayed on the display section.

According to claim 2 of the present invention, there is provided an optical disk recording medium comprising an optical disk recording medium body, and a display section provided on a surface of the optical disk recording medium body, a signal recording section capable of only reading data and a signal recording/deleting section capable of recording, rewriting and deleting data being provided on a programming area of the optical disk recording medium body, data corresponding to contents displayed on the display section being recorded in the signal-recording section.

With such arrangement, there is an effect that the data recorded in the optical disk recording medium are not deleted, in addition to the effect provided in claim 1 of the present invention.

According to claim 3 of the present invention, in addition to claim 1 or 2, the optical disk recording medium body has substantially the same shape as a name card.

With such arrangement, a person accepting the optical disk recording medium distributed can rearrange, accommodate and store the optical disk recording medium easily. In general, the optical disk recording medium such as CD-R and CD-RW is used in a doughnut shape and at a standardized size, and is necessarily not of a shape and a size convenient for the rearrangement, accommodation and the like. However, the optical disk recording medium is of a compact shape and a small size by assuming the above-described arrangement and hence, the above-described effect is provided.

The same shape of the optical disk recording medium as the name card means an oblong shape having a length of about 90 mm and a width of about 50 mm.

According to claim 4 of the present invention, in addition to any of claims 1 to 3, the contents displayed on the display section correspond to an advertisement, and the data recorded in the signal-recording section or the signal-recording/deleting section are those pertaining to an enterprise providing the advertisement.

With such arrangement, a person accepting the optical disk recording medium distributed watches contents introduced by the provider providing the advertisement on a display by using the distributed recording medium in a computer, whereby large advertisement and propaganda effects can be provided.

The advertisement used herein, for example, if the provider is a company, means contents introduced such as an article of commerce sold by the company, a servicing conducted by the company, a shop address and the like which have been provided by the company.

A company or an individual distributing the optical disk recording medium can distribute the recording medium without charge to a large number of unspecified persons by collecting an advertising fee from a company providing an advertisement or the like displayed on the recording medium, thereby making a chance for the advertisement and propaganda to many persons.

According to claim 5 of the present invention, in addition to claim 4, data permitting an access to a homepage of the enterprise providing the advertisement is recorded in the signal-recording section or the signal-recording/deleting section.

With such arrangement, a homepage of a provider providing an advertisement is projected to a display through a network such as the Internet, and a person accepting the provision of the optical disk recording medium watches the homepage on the display, leading to a remarkable increase in an advertising and propagating effect.

According to claim 6 of the present invention, there is provided an optical disk recording medium comprising an optical disk recording medium body accommodated in a receptacle, and a display section provided on a surface of the optical disk recording medium body, a signal-recording/deleting section capable of recording and rewriting data being provided on a programming area of the optical disk recording medium body, data corresponding to contents displayed on the receptacle being recorded in the signal-recording deleting section.

With the arrangement, for example, when the optical disk recording medium inserted into a card case made of transparent plastic material has been distributed to a large number of unspecified persons, a person accepting the distribution, if he utilizes the distributed optical disk recording medium by a his own computer in order to utilize the signal-recording/deleting section of the distributed optical disk recording medium, can read out data corresponding to contents recorded in the signal-recording/deleting section of the optical disk recording medium and displayed on the receptacle.

The receptacle means one for accommodating the optical disk recording medium, including an envelope and the like made of a plastic material or a paper. This concept includes prints and the like such as an accompanying document accommodated along with the optical disk recording medium in the receptacle made of the plastic material or the envelope made of the paper.

According to claim 7 of the present invention, there is provided an optical disk recording medium comprising an optical disk recording medium body accommodated in a receptacle, and a display section provided on a surface of the optical disk recording medium body, a signal recording section capable of only reading data and a signal recording/deleting section capable of recording, rewriting and deleting data being provided on a programming area of the optical disk recording medium body, data corresponding to contents displayed on the receptacle being recorded in the signal-recording section.

With such arrangement, there is an effect that the data recorded in the optical disk recording medium are not deleted, in addition to the effect provided in claim 6 of the present invention.

According to claim 8 of the present invention, in addition to claim 6 or 7, the optical disk recording medium body has substantially the same shape as a name card.

With such arrangement, a person accepting the optical disk recording medium distributed can rearrange, accommodate and store the optical disk recording medium easily.

According to claim 9 of the present invention, in addition to any of claims 6 to 8, the contents displayed on the receptacle are for advertisement, and the data recorded in the signal-recording section or the signal-recording/deleting section are those pertaining to an enterprise providing the advertisement.

With such arrangement, a person accepting the optical disk recording medium distributed watches contents introduced by the provider providing the advertisement on a display by using the distributed recording medium in a computer, whereby large advertisement and propaganda effects can be provided.

A company or an individual distributing the optical disk recording medium can distribute the recording medium without charge to a large number of unspecified persons by collecting an advertising fee from a company providing an advertisement or the like displayed on the recording medium or on the receptacle having the recording medium accommodated therein, thereby making a chance for the advertisement and propaganda to many persons.

According to claim 10 of the present invention, in addition to claim 9, data for an access to a homepage of the enterprise providing the advertisement is recorded in the signal-recording section or the signal-recording/deleting section.

With such arrangement, a homepage of a provider providing an advertisement to a display through a network such as the Internet, and a person accepting the provision of the optical disk recording medium watches the homepage on the display, leading to a remarkable increase in an advertising and propagating effect.

According to claim 11 of the present invention, there is provided a name card comprising an optical disk recording medium, and a name card expression section provided on a surface of a body of the optical disk recording medium, a signal-recording/deleting section capable of recording, rewriting and deleting data being provided in a programming area of the optical disk recording medium body, data permitting an access to a homepage of a person written on the name card expression section being recorded in the signal-recording/deleting section.

With such arrangement, the homepage of the person written on the name card expression section on the surface of the optical disk recording medium body is displayed on a display through a network such as the Internet, and a person accepting the provision of the name card can watch the homepage on the display to obtain an information pertaining to the person written on the name card expression section.

According to claim 12 of the present invention, there is provided a name card comprising an optical disk recording medium, and a name card expression section provided on a surface of a body of the optical disk recording medium, a signal-recording section for only reading data being provided in a programming area of the optical disk recording medium body, data permitting an access to a homepage of a person written on the name card expression section being recorded in the signal-recording section.

With such arrangement, there is an effect that the data recorded in the optical disk recording medium are not deleted, in addition to the effect provided in claim 11 of the present invention.

According to claim 13 of the present invention, in addition to claim 12, a signal-recording/deleting section capable of recording, rewriting and deleting data is provided in the programming area of the optical disk recording medium body.

With such arrangement, a person accepting the name card distributed can store data made by himself in the optical disk recording medium.

According to claim 14 of the present invention, there is provided an advertis ing method comprising the steps of displaying a predetermined advertisement in a display section provided on a surface of a body of an optical disk recording medium, recording data corresponding to an advertisement in a signal-recording/deleting section which is capable of recording, rewriting and deleting data and which is provided in a programming section of the optical disk recording medium body, and distributing the optical disk recording medium.

With such method having the above feature, for example, when the optical disk recording medium inserted into a card case made of a transparent plastic material has been distributed to a large number of unspecified persons, a person accepting the optical disk recording medium distributed, if he utilizes the distributed optical disk recording medium in a his own computer in order to utilize the signal-recording/deleting section of the distributed optical disk recording medium, can read out data corresponding to the advertisement, leading to an increase in an advertising and propagating effect.

According to claim 15 of the present invention, there is provided an advertising method comprising the steps of displaying a predetermined advertisement in a display section provided on a surface of a body of an optical disk recording medium, recording data corresponding to the advertisement in a signal-recording section intended for only reading data and provided in a programming section of the optical disk recording medium body, which is provided further with a signal-recording/deleting section capable of recording, a rewriting and deleting data, and distributing the optical disk recording medium.

With the advertising process having the above feature, there is an effect that the data recorded in the optical disk recording medium are not deleted, in addition to the effect provided in claim 14.

According to claim 16 of the present invention, in addition to claim 14 or 15, data permitting an access to a homepage of a company providing the advertisement are recorded in the signal-recording section or the signal-recording/deleting section.

With such process having such feature, the homepage of a provider providing the advertisement is displayed on a display through a network such as internet, and a person accepting the optical disk recording medium distributed watches the homepage on the display, leading to an increase in advertising and propagating effect.

According to claim 17 of the present invention, there is provided an advertising method comprising the steps of displaying a predetermined advertisement on a receptacle in which an optical disk recording medium is accommodated, recording data corresponding to the advertisement in a signal-recording/deleting section which is capable of recording, rewriting and deleting data and which is provided in a programming area of a body of the optical disk recording medium, and distributing the optical disk recording medium accommodated in the receptacle.

With the process having such feature, for example, when the optical disk recording medium inserted in a card case made of a plastic material with an advertisement displayed thereon is distributed to a large number of unspecified persons, a person accepting the optical disk recording medium distributed, if he utilizes the distributed optical disk recordings medium in his own computer in order to utilize the signal-recording/deleting section of the distributed optical disk recording medium, can read out data corresponding to the advertisement displayed on the card case.

According to claim 18 of the present invention, there is provided an advertising method comprising the steps of displaying a predetermined advertisement in a receptacle in which an optical disk recording medium is accommodated, and distributing an optical disk recording medium accommodated in a receptacle, the optical disk recording medium including a signal-recording section intended for only reading data and provided in a programming section of a body of said optical disk recording medium, data corresponding to the advertisement being recorded in the signal-recording section, the optical disk recording medium further including a signal-recording/deleting section capable of recording, rewriting and deleting data.

With the advertising process having the above feature, there is an effect that the data recorded in the optical disk recording medium are not deleted, in addition to the effect provided in claim 17.

According to claim 19 of the present invention, in addition to claim 14 or 18, data permitting an access to a homepage of a company providing the advertisement are recorded in the signal-recording section or the signal-recording/deleting section.

With such process having such feature, the homepage of a provider providing the advertisement is displayed on a display through a network such as internet, and a person accepting the optical disk recording medium distributed watches the homepage on the display, leading to an increase in advertising and propagating effect.

### BRIEF DESCRIPTION OF THE DRAWINGS

Fig.1 is a plan view of a recording medium according to the present invention;
Fig. 2 is a back view of the recording medium shown in Fig. 1;
Fig.3 is a plan view of the recording medium inserted in a card case;
Fig.4 is a plan view of the card case;
Fig.5 is a plan view of a body of the recording medium according to the present invention;
Fig.6 is a back view of the recording medium body;
Fig.7 is a sectional view of the recording medium body taken along a line X-X ion Fig. 5;

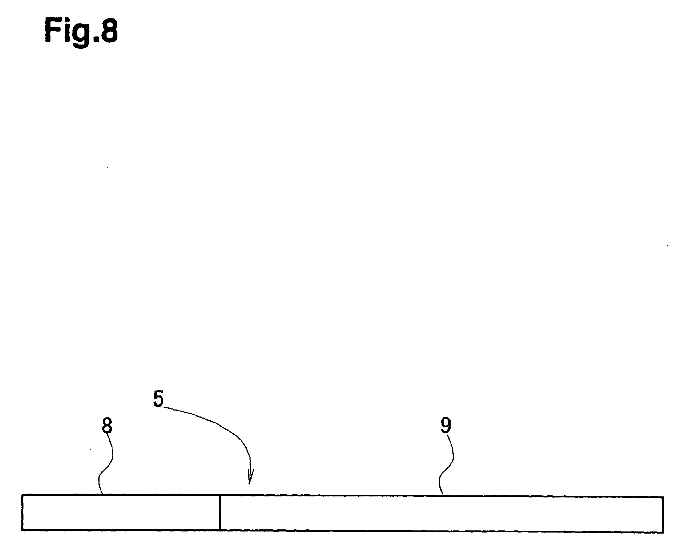

Fig.8 is a view for explaining a programming area of the recording medium body; and
Fig.9 is a diagram for explaining the arrangement of a computer system.

### DESCRIPTION OF REFERENCE CHARACTERS

- 1: Recording medium
- 2: Recording medium body
- 3: Display section
- 4: Clamping area
- 4A: Hole
- 5: Programming area
- 6: Lead-in
- 7: Lead-out
- 8: Signal-recording section
- 9: Signal-recording/deleting section
- 10: Disk substrate
- 11: Aluminum-deposited layer
- 12: Plastic layer
- 13: Advertisement
- 20: Computer
- 21: Display
- 22: Key board

### BEST MODE FOR CARRYING OUT THE INVENTION

A recording medium, a name card and an advertising method using the recording medium according to the present invention will now be described with reference to the accompanying drawings.

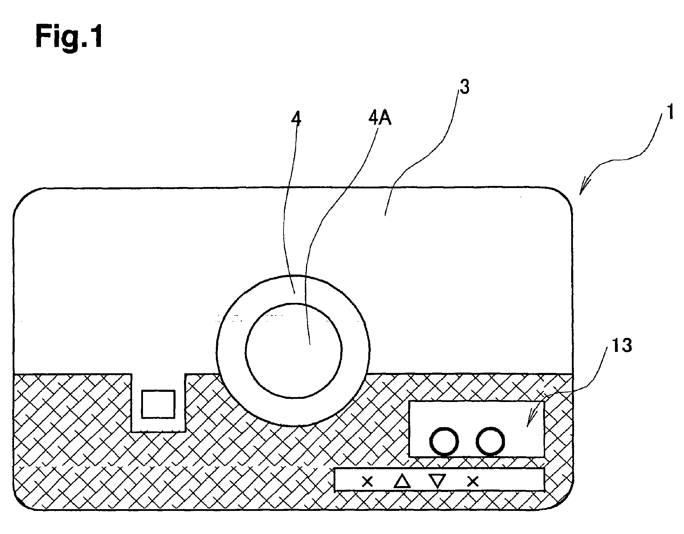

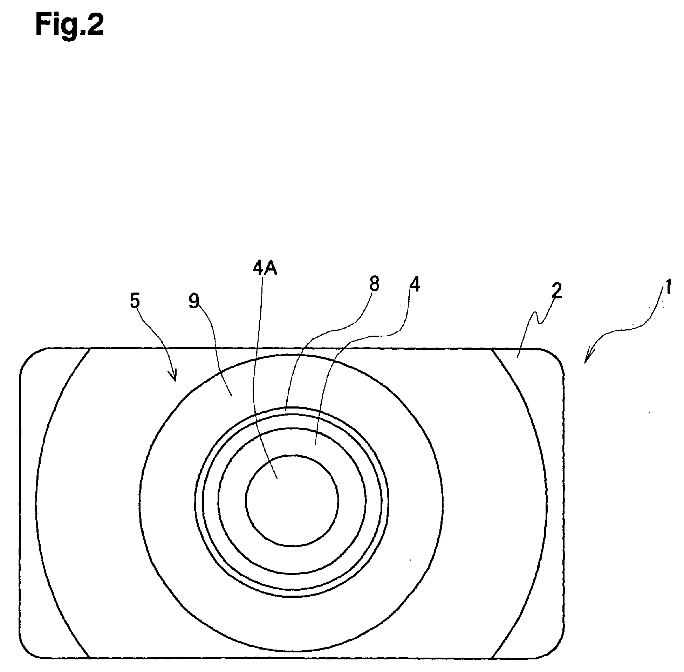

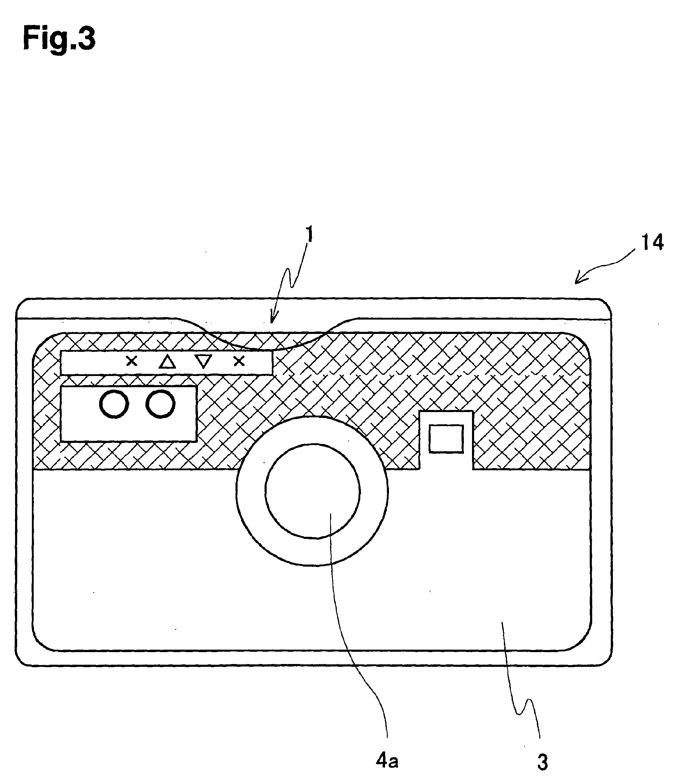

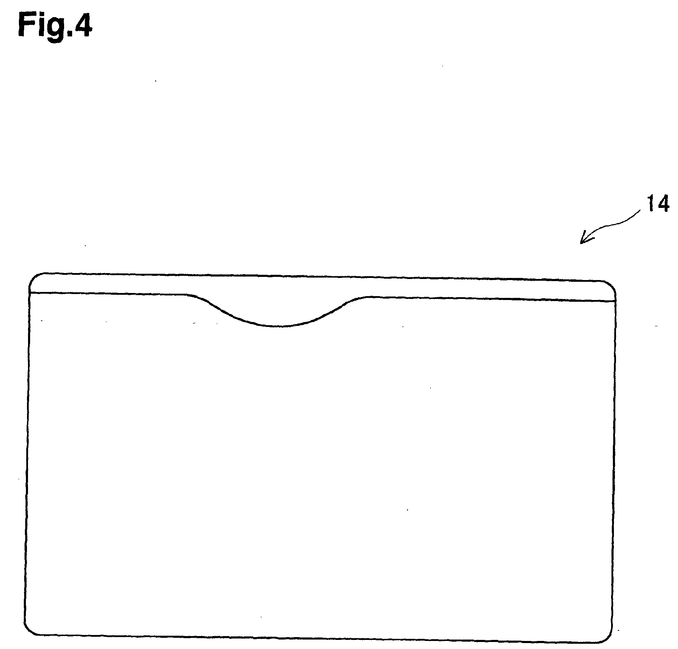

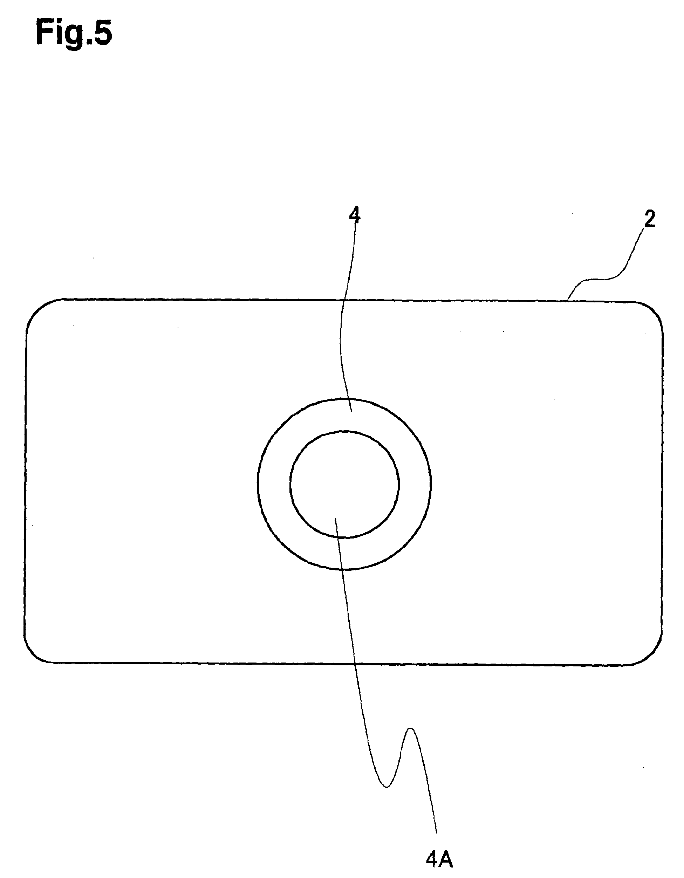

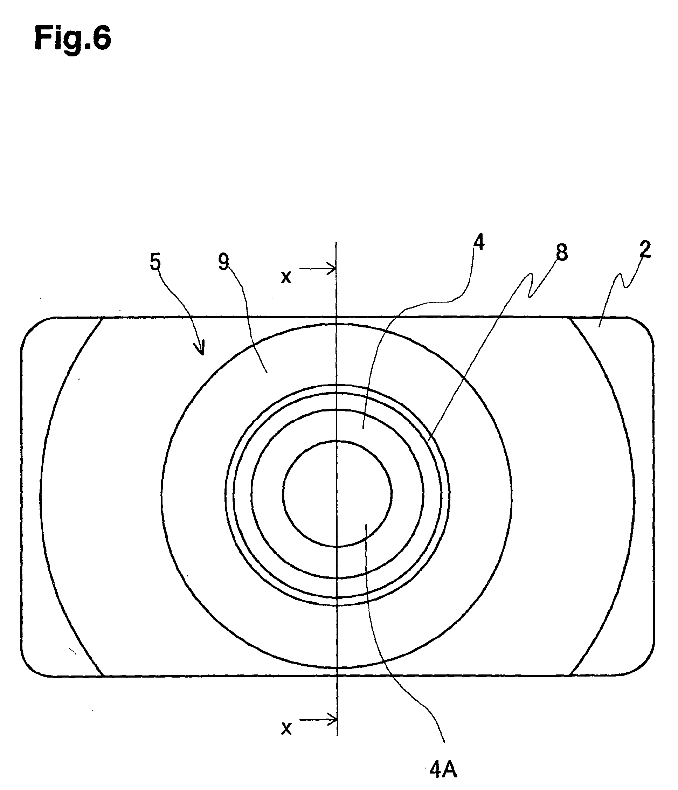

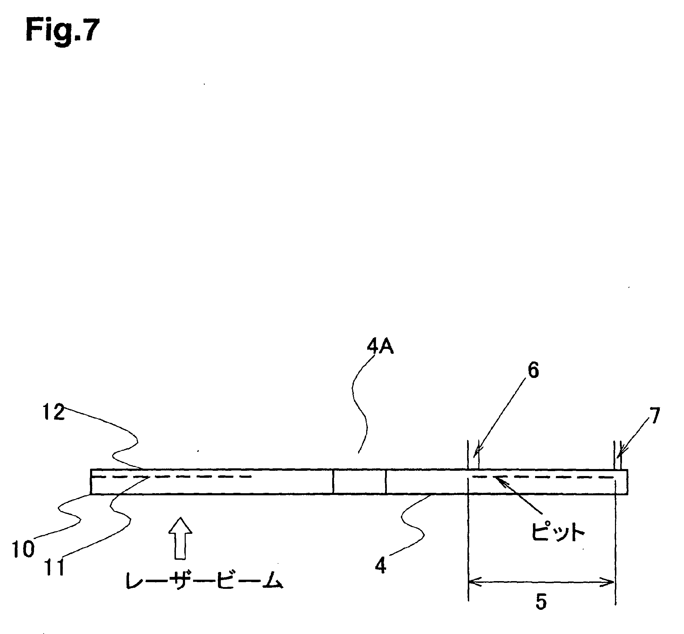

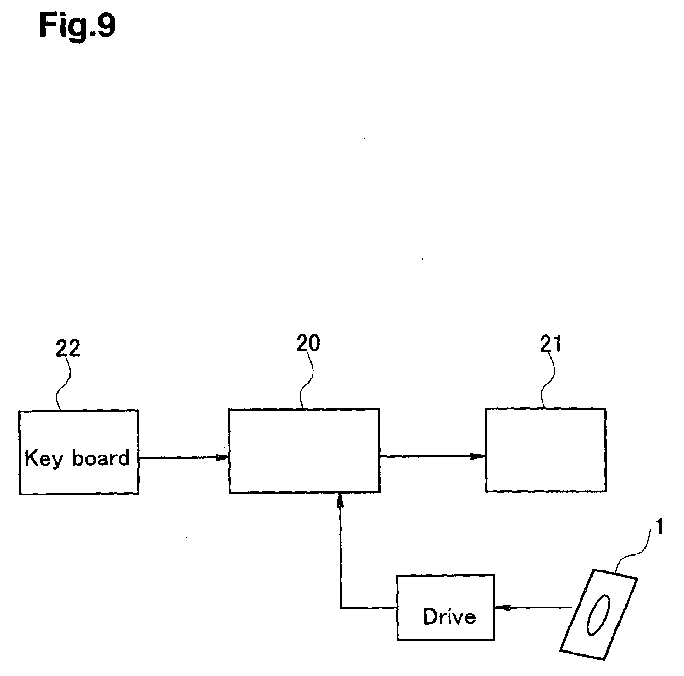

Fig.1 is a plan view of a recording medium according to a first embodiment of the present invention; Fig.2 is a back view of the recording medium; Fig. 3 is a plan view of the recording medium inserted in a card case; Fig.4 is a plane view of the card case; Fig.5 is a plan view of a recording medium body of the recording medium according to the present invention; Fig.6 is a back view of the recording medium body; Fig. 7 is a sectional view taken along a line X-X in Fig. 5; Fiug. 8 is a view for explaining a programming area of the recording medium body; and Fig.9 is a diagram for explaining the arrangement of a computer system.

A recording medium 1 according to the present invention is comprised of a recording medium body 2, and a display section 3 provided on a surface of the recording medium body 2.

The recording medium body 2 is of an oblong shape and sized as large as a name card. As shown in Fig.7, the recording medium body 2 is provided with a clamping area 4 having a hole 4A at a central portion, a programming area 5 located around the clamping area 4, a lead-in 6 located at an inner periphery of the programming area 5, and a lead-out 7 located at an outer periphery of the programming area 5.

A signal-recording section 8 for only reading data is provided at an inner periphery of the programming area 5, and a signal-recording/deleting section 9 capable of recording, rewriting and deleting data is provided outside the signal-recording section 8.

The recording medium body 2 comprises an aluminum-deposited layer 11 which is formed on a disk substrate made of a transparent plastic material (e.g., a polycarbonate) and which is adapted to reflect light such as a laser beam, and a transparent plastic layer 12 formed on a surface of the aluminum-deposited layer 11. The signal-recording section 8 has a rugged portion formed on the aluminum-deposited layer 11 to record a signal, and the signal-recording/deleting section 9 has a recording layer adapted to record data by applying a laser beam to the recording layer to change the molecular arrangement in the recording layer, or has an amorphous thin film adapted to record 1 and 0 by applying a laser beam to the thin film to change the reflectance of the thin film.

Introduced contents of a company or the like providing an advertisement 13 displayed on the display section 3 provided on the surface of the recording medium body 2 are recorded in the form of data in the signal-recording section 8, and the signal-recording/deleting section 9 is an area for recording, rewriting and deleting data by a person, as he desires, using the recording medium 1.

The recording medium 1 constructed in the above-described manner is distributed to a large number of unspecified persons in a state in which it has been inserted into a card case made of a transparent plastic material shown in Fig.4.

A company distributing the recording medium carries out the distribution of the recording medium without charge, because such company has a commercial profit by collecting an advertisement fee from a company providing an advertisement.

When a company sells the optical disk recording medium according to the present invention, the optical disk recording medium can be sold at a price cheaper than a usual price, because the company can collect an advertisement fee from a company providing an advertisement or the like displayed on the recording medium.

If a person accepting the distributed recording medium installs the recording medium 1 in his own computer 20 in order to record or delete the recording medium, as he desires, the computer 20 reads out data in the signal-recording section 8 located at a first portion in the programming area 5 of the recording medium 1, whereby introduced contents of a company or the like providing the advertisement 13 are projected on a display 21. Then, the person can pass to the signal-recording/deleting section 9 in the programming area 5 of the recording medium to record or delete data as he desires, using a key board 22.

Therefore, if the person accepting the distributed recording medium installs the recording medium 1 in his own computer 20 in order to record or delete data in the recording medium 1, as he desires, he necessarily watches the introduced contents of the company or the like providing the advertisement 13 on the display 21, leading to a remarkably increased advertising and propagating effect.

In the above-described embodiment of the present invention, the introduced contents of the company or the like providing the advertisement 13 displayed on the display section 3 provided on the surface of the recording medium body 2 are recorded in a coded manner, but what are recorded in a coded manner may be a catalog, a direct mail and the like (an advertisement and the like).

The recording medium may be constructed, so that a signal permitting a direct access to a homepage of a company providing an advertisement 13 can be recorded in the signal-recording section 8, and so that if the recording medium 1 is installed in the computer 20, the homepage of the company providing the advertisement 13 is opened.

The recording medium can be used as a name card. In this case, the name card expression may be given on a surface of the recording medium body 2, and a signal permitting a direct access to a homepage of a person written on the name card may be recorded in the signal-recording section 8 of the recording medium body 2, so that if the recording medium 1 is installed in the computer 20, the homepage of the person written in the name card is opened on the display 21 through the Internet or the like.

Although the recording medium formed into a shape corresponding to a name card has been described in the above-described embodiment, the recording medium may be formed into a doughnut shape conventionally known as in CD-ROM, CD-R, CD-RW and DVD.

In addition, although the recording medium including the signal-recording section 8 and the signal-recording/deleting section 9 has been described in the above-described embodiment, the recording medium 1 may not be an optical disk recording medium including a signal-recording section 8 according to the present invention. In this case, data such as introduced contents of a company or the like providing the advertisement 13 displayed on the display section 3 are recorded in the signal-recording/deleting section 9. In addition, although the data have been recorded in the signal-recording section 8 in the above-described embodiment, the data may be recorded in the signal-recording/deleting section 9.

A second embodiment of an optical disk recording medium according to the present invention will be described below.

In the second embodiment, the optical disk recording medium is inserted in a card case made of a transparent plastic material shown in Fig.4. The inserted state of the optical disk recording medium is shown in Fig.3. In the present embodiment, an advertisement for an advertisement-providing company is displayed on the card case made of the plastic material.

Introduced contents of a company or the like displayed on the card case made of the plastic material are recorded in the form of data in a signal-recording section (see Fig.2) of the optical disk recording medium, and a signal-recording/deleting section 9 is an area adapted to record, rewrite and delete data by a person using the recording medium 1, as he desires. The other construction is similar to that described in the first embodiment.

Even in this embodiment, if a person accepting the distributed optical disk recording medium 1 installs the optical disk recording medium 1 in his own computer 20 in order to record or delete data in the optical disk recording medium as he desires, the introduced contents of the company or the like displayed on the card case made of the plastic material are displayed on a display 21, leading to a remarkably increased advertising and propagating effect.

Although the above description pertains to a case where the optical disk recording medium inserted in the card case made of the plastic material, another type of a receptacle may be used without limitation to the card case made of the plastic material. For example, when the optical disk recording medium is of a so-called doughnut shape conventionally known, a paper case or the like as usually used for the optical disk recording medium may be used. In this case, contents printed on the paper case are recorded in the form of data in the optical disk recording medium.

A third embodiment of the present invention will be described below.

In the third embodiment, an optical disk recording medium is inserted in a card case made of a transparent plastic material shown in Fig.4. The inserted state of the optical disk recording medium is shown in Fig.3. Even in the present embodiment, an accompanying document is inserted along with the optical disk recording medium in the card case made of the plastic material. An advertisement for an advertisement-providing company is printed on the accompanying document.

Introduced contents of a company or the like displayed on the plastic card case are recorded in the form of data in a signal-recording section (see Fig.2) of the optical disk recording medium, and a signal-recording/deleting section 9 is an area adapted to record, rewrite and delete data by a person using the recording medium 1, as he desires. The other construction is similar to that described in the first embodiment.

Even in this embodiment, if a person accepting the distributed optical disk recording medium 1 installs the optical disk recording medium 1 in his own computer 20 in order to record or delete data in the optical disk recording medium as he desires, the introduced contents of the company or the like displayed on the card case made of the plastic material are displayed on a display 21, leading to a remarkably increased advertising and propagating effect.

A fourth embodiment of an optical disk recording medium according to the present invention will be described below.

In the fourth embodiment, the optical disk recording medium is a so-called DVD-R, DVD-RW or DVD-RAM. The optical disk recording medium includes an optical disk recording medium body, and a display section provided on a surface of the optical disk recording medium body. A signal-recording section for only reading data and a signal-recording/deleting section capable of recording rewriting and deleting date are provided in a programming area of the optical disk recording medium body, and data corresponding to contents displayed on the display section are recorded in the signal-recording section. The optical disk recording medium of this embodiment is similar to the optical disk recording medium of the above-described embodiment, except that it is of a doughnut shape, and hence, this optical disk recording medium is not shown.

Even in the optical disk recording medium of this embodiment, if a user inserts the optical disk recording medium into his own computer or DVD recorder, the computer or the DVD recorder reads out the data in the signal-recording section located at a first portion of the programming area of the recording medium, whereby the contents displayed in the display section are projected on a display or a television. Thus, information can be recorded as desired in the signal-recording/deleting section by using the recording medium in the computer or the DVD recorder. The DVD recorder may be any device, if DVD can be played and recorded in the device. The DVD recorder may be a device for playing a game.

When the optical disk recording medium of this embodiment is used in the computer, asignal permitting an access to a homepage of a company providing an advertisement may be recorded in the signal-recording section, so that the homepage of the company providing the advertisement is displayed on a display through the Internet.

The optical disk recording medium of this embodimemt is also used in a DVD recorder or a game machine which is connectable to the Internet. Even in this case, signals for an access to a homepage of a company providing an advertisement may be recorded in the signal-recording section, so that the homepage of the company providing the advertisement may be displayed on a television screen through the Internet.

In the above-described embodiment, when the recording medium is installed in the computer, the computer reads out the data in the signal-recording section located at the first portion of the programming area of the recording medium, whereby the introduced contents of the company providing the advertisement are projected on the display. To use the recording medium according to the present invention, for example, the recording medium may be installed in the computer; the contents recorded in the recording medium may be copied in a hard disk included to or connected to the computer; data recorded in the hard disk may be read out; and the introduced contents of the company or the like providing the advertisement may be projected on the display.

The hard disk may be a so-called hard disk video recorder which is capable of recording an image or the like in the hard disk. In this case, a DVD player or a DVD recorder and the hard disk video recorder are connected to each other; an optical disk recording medium such as DVD-R, DVD-RW or DVD-RAM is inserted into the DVD player or the DVD recorder; data recorded in the optical disk recording medium are copied in a hard disk included in the hard disk video recorder; and data recorded in the hard disk is then read out.

The optical disk recording medium in the above-described embodiment may be one having recording surfaces provided on opposite sides thereof. For example, such optical disk recording medium includes an optical disk recording medium having signal-recording/deleting sections on opposite sides thereof, and an optical disk recording medium having a signal-recording/deleting section on one of sides thereof and a signal-recording medium on the other side. Another example is an optical disk recording medium having a signal-recording section at a portion of one of sides thereof, a signal-recording/deleting section at the other portion of the one side, and a signal-recording/deleting surface on the other side. In the optical disk recording medium having the signal-recording/deleting section and the signal-recording section on the opposite sides thereof, it is difficult to print an advertisement or the like for a company on a display section and hence, each of the sides may have a potion free of each of the signal-recording/deleting section and the signal-recording section. In addition, an optical disk recording medium may be accommodated in a receptacle; contents of an advertisement or the like may be printed on the receptacle; and an accompanying document having contents of an advertisement or the like printed may be inserted into the receptacle, as in the second and third embodiments.

As described above, for example, when the recording medium according to the present invention is distributed to a large number of unspecified persons in a state in which it has been inserted into a card case made of a transparent plastic material, if a person accepting the distributed recording medium uses the distributed optical disk recording medium in a his own computer in order to utilize the signal-recording/deleting section of the distributed optical disk recording medium, the computer reads out data from the signal-recording section located in the programming area of the recording medium, whereby introduced contents of a company or the like providing an advertisement are projected on the display section.

Therefore, if the person accepting the distributed recording medium uses the distributed optical disk recording medium in the computer, he necessarily watches the introduced contents of the company or the like providing the advertisement in the display, leading to a remarkably increased advertising and propagating effect.

A company or an individual distributing the recording medium can distribute the recording medium without charge to a large number of unspecified persons by virtue of an advertising fee collected from a company providing the advertisement or the like displayed in the recording medium, thereby providing a chance for the advertisement and propaganda to many persons.

When the optical disk recording medium according to the present invention is sold in a shop, such optical disk recording medium can be sold at a price cheaper than a usual price, because the shop can collect an advertising fee from a company providing an advertisement or the like displayed in the recording medium.

Since the data permitting an access to a homepage of a company or the like providing an advertisement or the like is recorded in the signal-recording section, if a person accepting the distributed recording medium uses the distributed recording medium in his own computer in order to utilize the signal-recording/deleting section of the recording medium, the computer reads out the date from the signal-recording section located in the programming area of the recording medium, whereby the homepage of the company or the like providing the advertisement or the like is opened on the display.

Therefore, when the person accepting the distributed recording medium installs the recording medium in the computer, he necessarily watches the homepage of the company or the like providing the advertisement or the like, leading to a remarkably increased advertising and propagating effect.

The recording medium according to the present invention can be used as a name card. In this case, if a person accepting the recording medium as a name card installs the recording medium in his own computer in order to utilize the signal-recording/deleting section of the recording medium, the computer reads out the data from the signal-recording section located in the programming area of the recording medium, whereby the homepage of a person written in the name card is opened on the display through the Internet.

Therefore, when the person accepting the distributed recording medium installs the recording medium in the computer, he can watch the homepage of the person written in the name card.

## Claims

1. An optical disk recording medium comprising an optical disk recording medium body, and a display section provided on a surface of the optical disk recording medium body,
a signal-recording/deleting section capable of recording, rewriting and deleting data being provided in a programming area of the optical disk recording medium body,
data corresponding to contents displayed on the display section being recorded in the signal-recording/deleting section.

2. An optical disk recording medium comprising an optical disk recording medium body, and a display section provided on a surface of the optical disk recording medium body,
a signal recording section capable of only reading data and a signal recording/deleting section capable of recording, rewriting and deleting data being provided on a programming area of the optical disk recording medium body,
data corresponding to contents displayed on the display section being recorded in the signal-recording section.

3. An optical disk recording medium according to claim 1 or 2, wherein said optical disk recording medium body has substantially the same shape as a name card.

4. An optical disk recording medium according to any of claims 1 to 3, wherein the contents displayed on the display section correspond to an advertisement, and said data recorded in the signal-recording section or the signal-recording/deleting section are those pertaining to an enterprise providing the advertisement.

5. An optical disk recording medium according to claim 4, wherein data permitting an access to a homepage of said enterprise providing said advertisement is recorded in said signal-recording section or said signal-recording/deleting section.

6. An optical disk recording medium comprising an optical disk recording medium body accommodated in a receptacle, and a display section provided on a surface of the optical disk recording medium body,
a signal-recording/deleting section capable of recording and rewriting data being provided on a programming area of said optical disk recording medium body,
data corresponding to contents displayed on the receptacle being recorded in said signal-recording deleting section.

7. An optical disk recording medium comprising an optical disk recording medium body accommodated in a receptacle, and a display section provided on a surface of the optical disk recording medium body,
a signal recording section capable of only reading data and a signal recording/deleting section capable of recording, rewriting and deleting data being provided on a programming area of said optical disk recording medium body,
data corresponding to contents displayed on said receptacle being recorded in said signal-recording section.

8. An optical disk recording medium according to claim 6 or 7, wherein said optical disk recording medium body has substantially the same shape as a name card.

9. An optical disk recording medium according to any of claims 6 to 8, wherein the contents displayed on said receptacle correspond to an advertisement, and said data recorded in said signal-recording section or said signal-recording/deleting section are those pertaining to an enterprise providing said advertisement.

10. An optical disk recording medium according to claim 9, wherein data permitting an access to a homepage of said enterprise providing said advertisement is recorded in said signal-recording section or said signal-recording/deleting section.

11. A name card comprising an optical disk recording medium, and a name card expression section provided on a surface of a body of said optical disk recording medium, a signal-recording/deleting section capable of recording, rewriting and deleting data being provided in a programming area of the optical disk recording medium body, data permitting an access to a homepage of a person written on said name card expression section being recorded in said signal-recording/deleting section.

12. A name card comprising an optical disk recording medium, and a name card expression section provided on a surface of a body of the optical disk recording medium, a signal-recording section for only reading data being provided in a programming area of said optical disk recording medium body, data permitting an access to a homepage of a person written on said name card expression section being recorded in said signal-recording section.

13. A name card according to claim 12, wherein a signal-recording/deleting section capable of recording, rewriting and deleting data is provided in the programming area of said optical disk recording medium body.

14. An advertising method comprising the steps of displaying a predetermined advertisement in a display section provided on a surface of a body of an optical disk recording medium, recording data corresponding to an advertisement in a signal-recording/deleting section which is capable of recording, rewriting and deleting data and which is provided in a programming section of said optical disk recording medium body, and distributing said optical disk recording medium.

15. An advertising method comprising the steps of displaying a predetermined advertisement in a display section provided on a surface of a body of an optical disk recording medium, recording data corresponding to said advertisement in a signal-recording section intended for only reading data and provided in a programming section of said optical disk recording medium body, which is provided further with a signal-recording/deleting section capable of recording, a rewriting and deleting data, and distributing said optical disk recording medium.

16. An advertising method according to claim 14 or 15, wherein data permitting an access to a homepage of a company providing said advertisement are recorded in said signal-recording section or said signal-recording/deleting section.

17. An advertising method comprising the steps of
displaying a predetermined advertisement on a receptacle in which an optical disk recording medium is accommodated,
recording data corresponding to said advertisement in a signal-recording/deleting section which is capable of recording, rewriting and deleting data and which is provided in a programming area of a body of said optical disk recording medium, and
distributing said optical disk recording medium accommodated in said receptacle.

18. An advertising method comprising the steps of
displaying a predetermined advertisement in a receptacle in which an optical disk recording medium is accommodated,
distributing an optical disk recording medium accommodated in a receptacle, said optical disk recording medium including a signal-recording section intended for only reading data and provided in a programming section of a body of said optical disk recording medium, data corresponding to said advertisement being recorded in the signal-recording section, said optical disk recording medium further including a signal-recording/deleting section capable of recording, rewriting and deleting data.

19. An advertising method according to claim 17 or 18, wherein data permitting an access to a homepage of a company providing said advertisement are recorded in said signal-recording section or said signal-recording/deleting section.
